# EUROPÄISCHE PATENTSCHRIFT

(11) **EP 3 738 811 B1**
(45) Veröffentlichungstag und Bekanntmachung des Hinweises auf die Patenterteilung: **26.01.2022**
(21) Anmeldenummer: 19174649.4
(22) Anmeldetag: 15.05.2019
(51) Int. Cl.: B60K 15/035, B60K 15/04

(54) **ENTLÜFTUNGSVORRICHTUNG ZUR ENTLÜFTUNG EINES KRAFTFAHRZEUGTANKS**
VENTING DEVICE FOR VENTING OF MOTORVEHICLE TANKS
DISPOSITIF D'AÉRATION D'UN RÉSERVOIR DE VÉHICULE AUTOMOBILE

(43) Veröffentlichungstag der Anmeldung: 18.11.2020
(73) Patentinhaber: Magna Energy Storage Systems GesmbH, 8261 Sinabelkirchen (AT)
(72) Erfinder: WIEDNER, Patrick Michael, 8230 Hartberg (AT); STEINMANN, Dominik, 8223 Stubenberg (AT); KULMER, Karl-Heinz, 8200 Gleisdorf (AT)
(74) Vertreter: Zangger, Bernd

(56) Entgegenhaltungen:
- DE-A1- 19 605 922
- DE-A1-102009 057 860
- FR-A1- 3 015 909

## Beschreibung

### Gebiet der Erfindung

Die vorliegende Erfindung betrifft eine Entlüftungsvorrichtung zur Entlüftung eines Kraftfahrzeugtanks.

### Stand der Technik

Es ist bekannt, Kraftfahrzeugtanks, also Tanks in Kraftfahrzeugen, insbesondere Tanks für den Kraftstoff zum Antreiben des Kraftfahrzeugs wie Benzin oder Dieselkraftstoff, während des Betriebs des Kraftfahrzeuges durch eine Betriebsentlüftung zu entlüften. Die Betriebsentlüftung erfolgt in der Regel an einem oder an mehreren höchsten Punkten des Kraftfahrzeugtanks. Das abgeführte Gas kann in ein Kraftstoffdampffilter, insbesondere ein Aktivkohlefilter, geleitet werden, um möglichst wenig Kohlenwasserstoffe in die Umwelt abzugeben. Für die Betankung des Kraftfahrzeugtanks kann eine eigene Betankungsentlüftung vorgesehen sein, wobei auch das bei der Betankungsentlüftung abgegebene Gas in das Aktivkohlefilter geleitet wird.

Zur Vermeidung von Schäden am Aktivkohlefilter ist es bekannt, den in den Entlüftungsleitungen strömenden Kraftstoffdampf über einen Flüssigkeitsabscheider zu trennen, so dass Flüssigkeit abgeschieden wird und wieder in den Tank zurückfließen kann und nur Gas zum Aktivkohlefilter gelangt. Solche Flüssigkeitsabscheider können in den Entlüftungsleitungen in Form eigener Zwischenbehälter angeordnet sein. In jüngerer Zeit ist es auch bekannt Flüssigkeitsabscheider direkt in einem Anschlussnippel des Einfüllrohrs auszubilden, so dass abgeschiedenen Flüssigkeit direkt in das Einfüllrohr gelangen kann und über das Einfüllrohr abfließen kann. Derartige Abscheidenippel benötigen nur einen geringen Bauraum und die abgeschiedene Flüssigkeit kann leicht abgeführt werden.

Aus der EP 1955888 A2 ist ein Flüssigkeitsdampfabscheider für das Kraftstoffsystem eines Fahrzeugs bekannt, wobei der Flüssigkeitsdampfabscheider einen Körper mit einem Einlass umfasst, der mit einem Entlüftungssystem eines Kraftstofftanks verbindbar ist, und mit einem Dampfauslass, der mit einer Kraftstoffdampfbehandlungsvorrichtung verbindbar ist, und einen Kondensationsraum zur Kondensation von Kraftstofftröpfchen, wobei der Kondensationsraum mit dem Einlass und dem Auslass in Strömungsverbindung steht, im Kondensationsraum ein Tröpfchenabscheider angeordnet ist, der eine Trennwand umfasst und sich der Kondensationsraum an einem Einfüllstutzen des Kraftstoffsystems erstreckt.

Während des Fahrbetriebs, sowie auch im Zuge von sogenannten Sofortentlüftungen, zum Beispiel zum sofortigen Druckabbau nach Betätigung einer Tankklappenentriegelung eines Hybridfahrzeuges, kann es zu hohen Gasvolumenströmungen im Entlüftungssystem kommen, die auch eine hohe Sättigung an flüssigem Kraftstoff aufweisen können.

Bekannte Abscheidenippel am Einfüllrohr kommen kaum mit solchen höheren Gasvolumenströmen zurecht, insbesondere auf Grund des geringen Arbeitsvolumens derartiger Abscheider. Ein zu niedriger Abscheidegrad kann jedoch eine erhöhte Belastung oder sogar eine Zerstörung des Kraftstoffdampffilters, insbesondere Aktivkohlefilters, bewirken.

Übliche vom Einfüllrohr separate Flüssigkeitsabscheider haben zwar größere Arbeitsvolumen, jedoch ist die Zu- und Abfuhr der verschiedenen Fluide aufwändiger. Wenn Volumenströme aus dem Entlüftungssystem des Kraftfahrzeugtanks zusätzlich durch das Einfüllrohr geführt werden müssen, erfolgt dies üblicherweise mittels jeweils eigener Anschlussnippel, beispielsweise einem Anschlussnippel zum Einlass des Gases und an anderer Stelle am Einfüllrohr einem weiteren Anschlussnippel zum Auslass des Gases. Derartige Lösungen benötigen viele Bauteile und sind kostenintensiv.

Die DE 10 2009 057860 A1 offenbart einen Kraftstoffbehälter mit wenigstens einem einen Betankungskanal umschließenden Einfüllrohr mit wenigstens einer Entlüftungsleitung, die wenigstens einen ersten und einen zweiten Leitungsabschnitt umfasst, wobei der erste Leitungsabschnitt sich von einem Entlüftungsanschluss des Kraftstoffbehälters zu einem Anschluss am Einfüllrohr und der zweite Leitungsabschnitt sich von einem Anschluss an dem Einfüllrohr zu einem Kraftstoffdampffilter erstreckt, wobei wenigstens ein Leitungsabschnitt über einen Anschlussfitting unmittelbar in das Einfüllrohr mündet.

Aus der DE 196 05 922 A1 ist eine Entlüftungsvorrichtung für den Kraftstofftank eines Kraftfahrzeugs bekannt, mit einem Entlüftungskanal, der den sich im Kraftstofftank oberhalb des Kraftstoffs befindlichen Gasraum mit einem Aktivkohlefilter verbindet, und einem Sperrventil, das die Verbindung zwischen Gasraum und dem Aktivkohlefilter beim Betanken freigibt, wobei in dem Entlüftungskanal zusätzlich ein Kraftstoff-Abscheider angeordnet ist.

### Zusammenfassung der Erfindung

Es ist eine Aufgabe der Erfindung, eine Entlüftungsvorrichtung zur Entlüftung eines Kraftfahrzeugtanks anzugeben, die auch bei hohen Gasvolumenströmen zuverlässig funktioniert, dabei jedoch wenige Bauteile und geringe Herstellungskosten aufweist.

Die Lösung der Aufgabe erfolgt durch eine Entlüftungsvorrichtung zur Entlüftung eines Kraftfahrzeugtanks mit den Merkmalen gemäß Anspruch 1.

Die Entlüftungsvorrichtung umfasst ein Einfüllrohr, eine Entlüftungsleitung die an einem ersten Ende mit dem Kraftfahrzeugtank fluidverbindbar ist und an einem dem ersten Ende entgegengesetzten zweiten Ende über einen Entlüftungszugang mit dem Einfüllrohr fluidverbunden ist, und eine Entgasungsleitung, die an einem ersten Ende über einen Entgasungsabgang mit dem Einfüllrohr fluidverbunden ist, wobei die Entgasungsleitung an einem dem ersten Ende entgegengesetzten zweiten Ende mit einem Flüssigkeitsabscheider fluidverbunden ist, wobei der Entlüftungszugang und der Entgasungsabgang an einem gemeinsamen Anschlussnippel am Einfüllrohr ausgebildet sind.

Erfindungsgemäß erfolgt die Entlüftung eines Kraftfahrzeugtanks über eine Entlüftungsleitung, insbesondere eine Betriebsentlüftungsleitung. Die Abscheidung der in der Entlüftungsleitung enthaltenen Flüssigkeit erfolgt in einem, vom Einfüllrohr separaten, also getrennten, Flüssigkeitsabscheider. Der Gasvolumenstrom wird vor dem Flüssigkeitsabscheider über einen Entlüftungszugang in ein Einfüllrohr des Kraftfahrzeugtanks geleitet und aus dem Einfüllrohr über einen Entgasungsabgang wieder abgenommen, bevor es zum Flüssigkeitsabscheider gelangt. Erfindungsgemäß wird ein gemeinsamer Anschlussnippel verwendet, um den Entlüftungszugang und den Entgasungsabgang aus dem Einfüllrohr zu realisieren. Dadurch werden trotz hoher Abscheidekapazität, durch Verwendung eines vom Einfüllrohr getrennten Flüssigkeitsabscheiders mit entsprechend großem Volumen, Bauteile und Herstellungskosten eingespart.

Der Entlüftungszugang liegt erfindungsgemäß in Einbaulage oben am Einfüllrohr.

Durch den oben liegenden Entlüftungszugang kann daher Dampf aus der Entlüftungsleitung in das Einfüllrohr strömen bzw. fallen. Ein Flüssiganteil des Dampfes kann entlang des Bodens des Einfüllrohres abfließen, während ein Gasanteil zum oben liegenden Entgasungsabgang gelangen kann und dort entweichen kann.

Erfindungsgemäß umfasst die Entlüftungsvorrichtung einen im Einfüllrohr angeordneten Führungsbogen, der so angeordnet und geformt ist, dass ein durch den Entlüftungszugang in das Einfüllrohr eintretender Dampf zwischen der Innenwand des Einfüllrohrs und dem Führungsbogen entlang des Umfangs des Einfüllrohrs geführt wird, so dass ein Gasanteil des eintretenden Dampfes durch den Entgasungsabgang entweicht und ein Flüssiganteil des eintretenden Dampfes durch das Einfüllrohr abfließt.

Der Führungsbogen ist erfindungsgemäß am gemeinsamen Anschlussnippel ausgebildet. Insbesondere kann der Führungsbogen am Anschlussnippel befestigt sein, oder der Führungsbogen ist einstückig mit dem Anschlussnippel ausgebildet.

Hierdurch wird ein Gasstrom aus der Entlüftungsleitung, insbesondere Betriebsentlüftungsleitung, zur Abscheidung der enthaltenen Flüssigkeit an das Einfüllrohr geleitet und eine Abscheidung, zusätzlich zur Abscheidung am Flüssigkeitsabscheider, erfolgt nicht in einem Anschlussnippel am Einfüllrohr, sondern im Einfüllrohr selbst. Das größere Volumen des Einfüllrohres wird daher als Arbeitsvolumen für die Abscheidung genutzt. Der Gasvolumenstrom wird dazu über die Entlüftungsleitung bis zum Entlüftungszugang am Einfüllrohr geführt, der in Einbaulage oben ausgebildet ist, so dass das Kraftstoffdampfgemisch in das Einfüllrohr fallen kann. Die Bewegung des Dampfes wird durch den Führungsbogen, also ein Bauteil mit bogenförmigem Querschnitt, so geführt, dass der Dampf umfänglich, im wesentlichen kreisbogenförmig, durch den Querschnitt des Einfüllrohres, insbesondere Einfüllkopfes, strömt, wobei lediglich der Gasanteil des Dampfes aufsteigt, um über den daher ebenfalls in Einbaulage oben angeordneten Entgasungsabgang, also eine weitere Öffnung, und weiter über die Entgasungsleitung zu strömen, um in Richtung des Flüssigkeitsabscheiders und bevorzugt des Kraftstoffdampffilters, insbesondere Aktivkohlefilters, zu gelangen. Der flüssige Kraftstoff steigt entlang des durch den Führungsbogen vorgegebenen Strömungswegs nicht bis zum Entgasungsabgang auf und rinnt daher über das Einfüllrohr, in Richtung zum Kraftfahrzeugtank, ab.

Bevorzugt verbindet eine zweite Entlüftungsleitung, insbesondere eine Betankungsentlüftungsleitung, den Kraftfahrzeugtank unmittelbar mit dem Flüssigkeitsabscheider fluidleitend. Der Flüssigkeitsabscheider kann daher sowohl für die Betriebsentlüftung als auch für die Betankungsentlüftung verwendet werden.

Besonders bevorzugt verbindet eine zweite Entgasungsleitung den Flüssigkeitsabscheider mit dem Kraftstoffdampffilter, insbesondere einem Aktivkohlefilter, fluidleitend.

Bevorzugt ist im Einfüllrohr am Entgasungsabgang eine Klappe angeordnet, so dass beim Einführen einer Zapfpistole in das Einfüllrohr die Klappe durch die Zapfpistole in einer Schließrichtung bewegt wird und somit der Entgasungsabgang während einer Betankung des Kraftfahrzeugtanks verkleinert oder geschlossen wird. Während der Betankung durch den Entlüftungszugang gelangender Dampf fließt daher vollständig, oder beispielsweise bis auf eine vordefinierte Menge, lediglich durch das Einfüllrohr ab.

Der Entgasungsabgang liegt besonders bevorzugt ebenfalls in Einbaulage oben am Einfüllrohr.

Die Begriffe "oben" und "unten" beziehen sich im Rahmen dieser Patentschrift auf die Richtung der Schwerkraft, so dass beispielsweise Flüssigkeit von "oben" nach "unten" fällt.

Bevorzugt sind an einer der Innenwand des Einfüllrohrs zugewandten Außenwand des Führungsbogens Rippen zur Flüssigkeitsabscheidung ausgebildet. Die Rippen können nur an einem Abschnitt des Führungsbogens ausgebildet sein, insbesondere nur auf einer, den eintretenden Dampf nach unten führenden, ersten Hälfte des Führungsbogens.

Der Querschnitt des Führungsbogens ist vorzugsweise im Wesentlichen U-förmig ausgebildet, oder O-förmig ausgebildet.

Der Führungsbogen kann mehrteilig ausgeführt sein.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung einer erfindungsgemäßen Entlüftungsvorrichtung.
- Fig. 2: ist eine Teildarstellung, welche das Einfüllrohr der Entlüftungsvorrichtung gemäß Fig. 1 im Bereich des Anschlussnippels von oben zeigt.
- Fig. 3: ist eine Schnittansicht gemäß Schnitt A-A der Fig. 2.

### Detaillierte Beschreibung der Erfindung

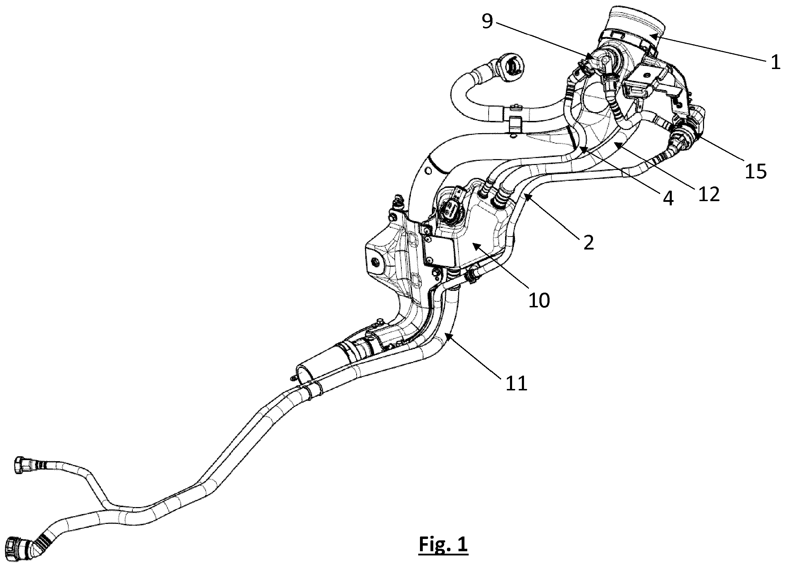

In Fig. 1 ist eine erfindungsgemäße Entlüftungsvorrichtung zur Entlüftung eines Kraftfahrzeugtanks, insbesondere eines Kraftstofftanks, dargestellt.

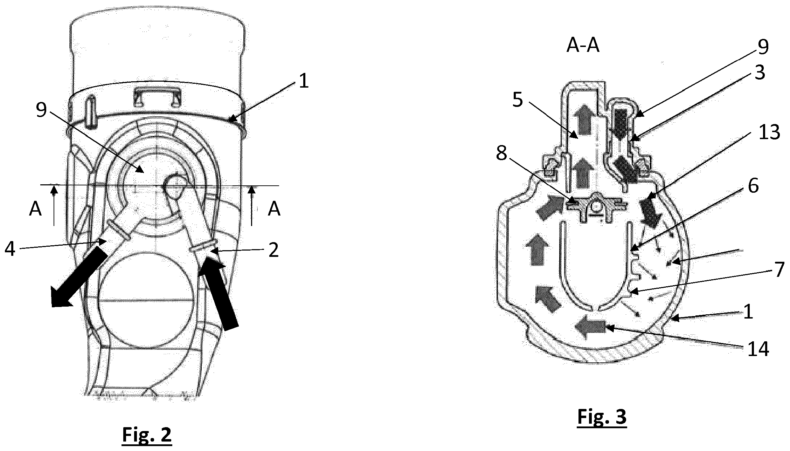

Die Entlüftungsvorrichtung umfasst ein Einfüllrohr 1, eine Entlüftungsleitung 2, nämlich eine Betriebsentlüftungsleitung, die an einem ersten Ende mit dem Kraftfahrzeugtank fluidverbindbar ist (in Fig. 1 unteres Ende der Entlüftungsleitung 2) und an einem dem ersten Ende entgegengesetzten zweiten Ende, stromabwärts einer Ventileinheit 15, über einen Anschlussnippel 9, an einem in Fig. 3 dargestellten Entlüftungszugang 3, mit dem Einfüllrohr 1 fluidverbunden ist.

Die Entlüftungsvorrichtung umfasst ferner eine Entgasungsleitung 4, als Rezirkulierleitung, die an einem ersten Ende über den selben Anschlussnippel 9, an einem in Fig. 3 dargestellten Entgasungsabgang 5, mit dem Einfüllrohr 1 fluidverbunden ist und die an einem dem ersten Ende entgegengesetzten zweiten Ende mit einem Flüssigkeitsabscheider 10, einer sogenannten "liquid trap" fluidverbunden ist. Der Entlüftungszugang 3 und der Entgasungsabgang 5 sind an dem gemeinsamen Anschlussnippel 9 am Einfüllrohr 1 ausgebildet.

Der Entlüftungszugang 3 liegt in Einbaulage oben am Einfüllrohr, so dass Dampf durch den Entlüftungszugang 3 in das Einfüllrohr 1 fallen kann. Auch der Entgasungsabgang 5 liegt in Einbaulage oben am Einfüllrohr 1, zumindest nicht in der Nähe des Bodens des Einfüllrohres 1, damit lediglich Gas bis zum Entgasungsabgang 5 gelangt, jedoch nicht flüssiger Kraftstoff.

Eine zweite Entgasungsleitung 12 verbindet den Flüssigkeitsabscheider 10 mit einem Kraftstoffdampffilter, insbesondere einem Aktivkohlefilter. In Fig. 1 (oben, links neben dem Anschlussnippel 9) ist hierzu lediglich das mit dem Kraftstoffdampffilter zu verbindende Ende der zweiten Entgasungsleitung 12 dargestellt, nicht das Kraftstoffdampffilter selbst.

Eine zweite Entlüftungsleitung 11, nämlich eine Betankungsentlüftungsleitung, die einen größeren Durchmesser aufweist als die Entlüftungsleitung 2, verbindet den Kraftfahrzeugtank unmittelbar mit dem Flüssigkeitsabscheider 10.

Der Anschlussnippel 9 ist im Detail in Fig. 2 näher dargestellt. Der in Fig. 2 eingezeichnete Schnitt A-A ist in Fig. 3 dargestellt.

Im Einfüllrohr 1 ist ein Führungsbogen 6 so angeordnet und geformt, dass ein durch den Entlüftungszugang 3 in das Einfüllrohr 1 eintretender Dampf, das mittels Pfeilen eingezeichnete, eintretende Kraftstoff-Gas-Gemisch 13, zwischen der Innenwand des Einfüllrohrs 1 und dem Führungsbogen 6 entlang des Umfangs des Einfüllrohrs 1 geführt wird, so dass ein Gasanteil des eintretenden Dampfes, eingezeichnet wieder durch Pfeile als Gas 14, durch den Entgasungsabgang 5 entweicht und ein Flüssiganteil des eintretenden Dampfes durch das Einfüllrohr 1 (in Fig. 3 in Richtung zum Betrachter) abfließt.

Der Führungsbogen 6 ist beispielsweise zylindersegmentförmig oder kegelsegmentförmig bzw. trichterförmig ausgebildet.

An einer der Innenwand des Einfüllrohrs 1 zugewandten Außenwand des Führungsbogens 6 sind abschnittsweise Rippen 7 zur Flüssigkeitsabscheidung ausgebildet.

Der Führungsbogen 6 ist im Wesentlichen als Profil mit U-förmigem Querschnitt ausgebildet oder mit O-förmigem Querschnitt ausgebildet.

Im Einfüllrohr 1 ist am Entgasungsabgang 5 eine Klappe 8 angeordnet, Die Klappe 8 ist axial verschiebbar gelagert. Beim Einführen einer Zapfpistole in das Einfüllrohr 1 wird die Klappe 8 durch die Zapfpistole in einer Schließrichtung bewegt und somit der Entgasungsabgang 5 während einer Betankung des Kraftfahrzeugtanks verkleinert oder geschlossen.

Der Führungsbogen 6 ist an seinen oberen Enden, den Enden der Schenkel der U-Form, am gemeinsamen Anschlussnippel 9 befestigt. Der Führungsbogen 6 kann auch den Ventilsitz für die Klappe 8 ausbilden.

### Bezugszeichenliste

- 1: Einfüllrohr
- 2: Entlüftungsleitung
- 3: Entlüftungszugang
- 4: Entgasungsleitung
- 5: Entgasungsabgang
- 6: Führungsbogen
- 7: Rippen
- 8: Klappe
- 9: Anschlussnippel
- 10: Flüssigkeitsabscheider
- 11: zweite Entlüftungsleitung
- 12: zweite Entgasungsleitung
- 13: Kraftstoff-Gas-Gemisch
- 14: Gas
- 15: Ventileinheit

## Patentansprüche

1. Entlüftungsvorrichtung zur Entlüftung eines Kraftfahrzeugtanks, umfassend ein Einfüllrohr (1), eine Entlüftungsleitung (2) die an einem ersten Ende mit dem Kraftfahrzeugtank fluidverbindbar ist und an einem dem ersten Ende entgegengesetzten zweiten Ende über einen Entlüftungszugang (3) mit dem Einfüllrohr (1) fluidverbunden ist, und eine Entgasungsleitung (4), die an einem ersten Ende über einen Entgasungsabgang (5) mit dem Einfüllrohr (1) fluidverbunden ist, wobei die Entgasungsleitung (4) an einem dem ersten Ende entgegengesetzten zweiten Ende mit einem Flüssigkeitsabscheider (10) fluidverbunden ist, wobei der Entlüftungszugang (3) und der Entgasungsabgang (5) an einem gemeinsamen Anschlussnippel (9) am Einfüllrohr (1) ausgebildet sind, **dadurch gekennzeichnet, dass** die Entlüftungsvorrichtung einen im Einfüllrohr (1) angeordneten Führungsbogen (6) umfasst, der so angeordnet und geformt ist, dass ein durch den Entlüftungszugang (3) in das Einfüllrohr (1) eintretender Dampf zwischen der Innenwand des Einfüllrohrs (1) und dem Führungsbogen (6) entlang des Umfangs des Einfüllrohrs (1) geführt wird, so dass ein Gasanteil des eintretenden Dampfes durch den Entgasungsabgang (5) entweicht und ein Flüssiganteil des eintretenden Dampfes durch das Einfüllrohr (1) abfließt, wobei der Führungsbogen (6) am gemeinsamen Anschlussnippel (9) ausgebildet ist, wobei der Entlüftungszugang (3) in Einbaulage oben am Einfüllrohr (1) liegt, so dass Dampf aus der Entlüftungsleitung (2) ins Einfüllrohr (1) fallen kann und ein Flüssigkeitsanteil des Dampfes entlang des Bodens des Einfüllrohres (1) abfließen kann.

2. Entlüftungsvorrichtung nach Anspruch 1,
**dadurch gekennzeichnet, dass** eine zweite Entlüftungsleitung (11) den Kraftfahrzeugtank unmittelbar mit dem Flüssigkeitsabscheider (10) fluidverbindet und eine zweite Entgasungsleitung (12) den Flüssigkeitsabscheider (10) mit einem Kraftstoffdampffilter, insbesondere einem Aktivkohlefilter, fluidverbindet.

3. Entlüftungsvorrichtung nach zumindest einem der vorhergehenden Ansprüche,
**dadurch gekennzeichnet, dass** im Einfüllrohr (1) am Entgasungsabgang (5) eine Klappe (8) angeordnet ist, so dass beim Einführen einer Zapfpistole in das Einfüllrohr (1) die Klappe (8) durch die Zapfpistole in einer Schließrichtung bewegt wird und somit der Entgasungsabgang (5) während einer Betankung des Kraftfahrzeugtanks verkleinert oder geschlossen wird.

4. Entlüftungsvorrichtung nach zumindest einem der vorhergehenden Ansprüche,
**dadurch gekennzeichnet, dass** der Entlüftungszugang (3) in Einbaulage oben am Einfüllrohr (1) liegt und dass der Entgasungsabgang (5) in Einbaulage oben am Einfüllrohr (1) liegt.

5. Entlüftungsvorrichtung nach zumindest einem der vorhergehenden Ansprüche,
**dadurch gekennzeichnet, dass** an einer der Innenwand des Einfüllrohrs (1) zugewandten Außenwand des Führungsbogens (6) Rippen (7) zur Flüssigkeitsabscheidung ausgebildet sind.

6. Entlüftungsvorrichtung nach zumindest einem der vorhergehenden Ansprüche,
**dadurch gekennzeichnet, dass** der Querschnitt des Führungsbogens (6) im Wesentlichen U-förmig ausgebildet ist oder O-förmig ausgebildet ist.

## Claims

1. Venting device for venting a motor vehicle tank, comprising a filling pipe (1), a venting line (2) which can be connected fluidically at a first end to the motor vehicle tank and which is connected fluidically at a second end, which is opposite the first end, to the filling pipe (1) via a venting entry (3), and a de-gassing line (4) which is connected fluidically at a first end to the filling pipe (1) via a de-gassing exit (5), wherein the de-gassing line (4) is connected fluidically at a second end, which is opposite the first end, to a liquid separator (10), wherein the venting entry (3) and the de-gassing exit (5) are formed at a common connection nipple (9) on the filling pipe (1), **characterized in that** the venting device comprises an arcuate guide element (6) which is arranged in the filling pipe (1) and which is arranged and shaped in such a way that a vapour entering the filling pipe (1) through the venting entry (3) is guided along the periphery of the filling pipe (1) between the inner wall of the filling pipe (1) and the arcuate guide element (6) such that a gas fraction of the entering vapour escapes through the de-gassing exit (5) and a liquid fraction of the entering vapour flows away through the filling pipe (1), wherein the arcuate guide element (6) is formed at the common connection nipple (9), wherein, in the installation position, the venting entry (3) is situated at the top of the filling pipe (1), with the result that vapour can fall into the filling pipe (1) from the venting line (2) and a liquid fraction of the vapour can flow away along the bottom of the filling pipe (1).

2. Venting device according to Claim 1,
**characterized in that** a second venting line (11) fluidically connects the motor vehicle tank directly to the liquid separator (10), and a second de-gassing line (12) fluidically connects the liquid separator (10) to a fuel vapour filter, in particular to an activated carbon filter.

3. Venting device according to at least either of the preceding claims,
**characterized in that** a valve (8) is arranged in the filling pipe (1) at the de-gassing exit (5) such that, when a filling nozzle is introduced into the filling pipe (1), the valve (8) is moved by the filling nozzle in a closing direction and the de-gassing exit (5) is consequently reduced or closed during a fuelling process for the motor vehicle tank.

4. Venting device according to at least one of the preceding claims,
**characterized in that**, in the installation position, the venting entry (3) is situated at the top of the filling pipe (1), and **in that**, in the installation position, the de-gassing exit (5) is situated at the top of the filling pipe (1).

5. Venting device according to at least one of the preceding claims,
**characterized in that** ribs (7) for liquid separation are formed on an outer wall, facing towards the inner wall of the filling pipe (1), of the arcuate guide element (6).

6. Venting device according to at least one of the preceding claims,
**characterized in that** the cross section of the arcuate guide element (6) is of substantially U-shaped form or O-shaped form.

## Revendications

1. Dispositif d'aération d'un réservoir de véhicule automobile, comportant un tube de remplissage (1), une conduite d'aération (2) qui peut être reliée de manière fluidique au réservoir de véhicule automobile à une première extrémité et est reliée de manière fluidique au tube de remplissage (1) par le biais d'une entrée d'aération (3) à une deuxième extrémité opposée à la première extrémité, et une conduite de dégazage (4) qui est reliée de manière fluidique au tube de remplissage (1) par le biais d'une sortie de dégazage (5) à une première extrémité, la conduite de dégazage (4) étant reliée de manière fluidique à un séparateur de liquide (10) à une deuxième extrémité opposée à la première extrémité, l'entrée d'aération (3) et la sortie de dégazage (5) étant réalisées sur un nipple de raccordement (9) commun sur le tube de remplissage (1), **caractérisé en ce que** le dispositif d'aération comporte un coude de guidage (6) disposé dans le tube de remplissage (1), lequel coude est disposé et formé de telle sorte qu'une vapeur entrant dans le tube de remplissage (1) à travers l'entrée d'aération (3) soit guidée entre la paroi intérieure du tube de remplissage (1) et le coude de guidage (6) le long de la périphérie du tube de remplissage (1), de sorte qu'une partie gazeuse de la vapeur entrante s'échappe à travers la sortie de dégazage (5) et qu'une partie liquide de la vapeur entrante s'écoule à travers le tube de remplissage (1), le coude de guidage (6) étant réalisé sur le nipple de raccordement (9) commun, l'entrée d'aération (3) se situant en haut du tube de remplissage (1) dans la position d'installation, de sorte que de la vapeur puisse tomber dans le tube de remplissage (1) à partir de la conduite d'aération (2) et qu'une partie liquide de la vapeur puisse s'écouler le long du fond du tube de remplissage (1).

2. Dispositif d'aération selon la revendication 1,
**caractérisé en ce qu'**une deuxième conduite d'aération (11) relie le réservoir de véhicule automobile de manière fluidique directement au séparateur de liquide (10) et qu'une deuxième conduite d'aération (12) relie le séparateur de liquide (10) de manière fluidique à un filtre à vapeur de carburant, en particulier à un filtre à charbon actif.

3. Dispositif d'aération selon au moins l'une des revendications précédentes, **caractérisé en ce qu'**un clapet (8) est disposé dans le tube de remplissage (1) au niveau de la sortie de dégazage (5), de sorte que, lors de l'insertion d'un pistolet de distribution dans le tube de remplissage (1), le clapet (8) est déplacé dans une direction de fermeture par le pistolet de distribution et par conséquent la sortie de dégazage (5) est réduite ou fermée pendant un ravitaillement du réservoir de véhicule automobile.

4. Dispositif d'aération selon au moins l'une des revendications précédentes, **caractérisé en ce que** l'entrée d'aération (3) se situe en haut du tube de remplissage (1) dans la position d'installation et **en ce que** la sortie de dégazage (5) se situe en haut du tube de remplissage (1) dans la position d'installation.

5. Dispositif d'aération selon au moins l'une des revendications précédentes, **caractérisé en ce que** des nervures (7) servant à la séparation de liquide sont disposés sur une paroi extérieure du coude de guidage (6) tournée vers la paroi intérieure du tube de remplissage (1).

6. Dispositif d'aération selon au moins l'une des revendications précédentes, **caractérisé en ce que** la section transversale du coude de guidage (6) est réalisée sensiblement en forme de U ou est réalisée en forme de O.
